(19) Europäisches Patentamt
European Patent Office
Office européen des brevets

(11) Veröffentlichungsnummer : **0 070 521**
**B1**

(12) **EUROPÄISCHE PATENTSCHRIFT**

(45) Veröffentlichungstag der Patentschrift : **13.06.84**

(51) Int. Cl.³ : **C 09 B 67/10**, C 09 B 67/14

(21) Anmeldenummer : **82106360.9**

(22) Anmeldetag : **15.07.82**

# (54) Verfahren zur Verbesserung der anwendungstechnischen Eigenschaften von Disazopigmenten.

(30) Priorität : **20.07.81 DE 3128598**
**01.04.82 DE 3212105**

(43) Veröffentlichungstag der Anmeldung :
**26.01.83 Patentblatt 83/04**

(45) Bekanntmachung des Hinweises auf die Patenterteilung : **13.06.84 Patentblatt 84/24**

(84) Benannte Vertragsstaaten :
**CH DE FR GB LI**

(56) Entgegenhaltungen :
**DE-A- 2 302 509**
**FR-A- 1 302 448**
**FR-A- 2 221 502**
**US-A- 3 991 044**
**US-A- 4 124 582**

(73) Patentinhaber : **HOECHST AKTIENGESELLSCHAFT**
**Postfach 80 03 20**
**D-6230 Frankfurt am Main 80 (DE)**

(72) Erfinder : **Rieper, Wolfgang, Dr.**
**Sternstrasse 11**
**D-6000 Frankfurt am Main (DE)**
Erfinder : **Hunger, Klaus, Dr.**
**Johann-Strauss-Strasse 35**
**D-6233 Kelkheim Taunus (DE)**

**EP 0 070 521 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Das Disazopigment C.I. Pigment Yellow 83 (C.I. 21108) hat sich wegen seiner guten anwendungstechnischen Eigenschaften als eines der wichtigsten organischen Gelbpigmente in der Lack- und Kunststoffindustrie durchgesetzt.

Bei der großtechnischen Produktion gelangt man jedoch häufig zu einem Produkt, das in seinem Migrationsverhalten im Vergleich zur chemisch reinen Disazoverbindung so verschlechtert ist, daß es den hohen anwendungstechnischen Anforderungen im Lack- und Kunststoffsektor nicht mehr genügt. Auch im Falle anderer Disazopigmente, die durch Kupplung bis-diazotierter 4,4'-Diaminodiphenyl-Derivate auf Acetoacetylaminobenzole erhalten werden, treten vor allem bei den großtechnischen Herstellungsverfahren häufig deutlich verschlechterte Lösungsmittel-, Überlackier- und Migrationsechtheiten im Vergleich zu den chemisch reinen Disazoverbindungen auf. Bei diesen technischen Verfahren werden auch die sonst allgemein üblichen Kupplungsmethoden angewendet. So wird zur Sicherstellung der quantitativen Umsetzung der Bisdiazoniumverbindung allgemein ein geringer Überschuß an Kupplungskomponente eingesetzt. Hierbei wird die Kupplungskomponente zur Erzielung einer feinverteilten kupplungsfähigen Form in wäßrigen Alkalien gelöst und dann mit Säure wieder ausgefällt. An die Kupplung schließt sich zur Verbesserung der Filtrierbarkeit und zur Erzielung einer kornweichen und farbstarken Pigmentform ein Erhitzen der Pigmentsuspension an. Diese Qualitätsschwankungen werden häufig auch dann beobachtet, wenn man die Bisdiazoniumsalzlösung und die alkalische Lösung der Kupplungskomponente gleichzeitig in das Reaktionsgefäß zulaufen läßt, wobei gegebenenfalls eine Pufferlösung vorgelegt wird.

Es wurde nun ein einfaches Verfahren gefunden, das es erlaubt, Pigment yellow 83 und verwandte Disazopigmente auch bei der großtechnischen Herstellung in einer solchen Reinheit zu erhalten, daß sie stets einwandfreie Lösungsmittel- und Migrationsechtheiten, insbesondere eine hohe Überlackierechtheit und Ausblutechtheit aufweisen.

Die Erfindung betrifft somit ein Verfahren zur Verbesserung der anwendungstechnischen Eigenschaften von Disazopigmenten, das dadurch gekennzeichnet ist, daß man der bei der Kupplung erhaltenen schwach-sauren bis neutralen wäßrigen Pigmentsuspension Sulfitionen zusetzt und anschließend erhitzt.

Gefunden wurde ein Verfahren zur Verbesserung der anwendungstechnischen Eigenschaften von Disazopigmenten, das dadurch gekennzeichnet ist, daß man der bei der Kupplung erhaltenen schwach sauren bis neutralen wäßrigen Suspension eines disazopigments mit der Struktur entsprechend der allgemeinen Formel

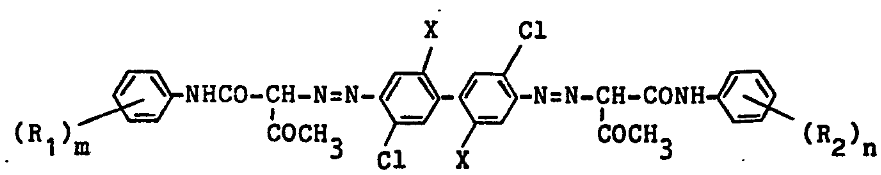

worin

$R_1$ und $R_2$ gleiche oder verschiedene Substituenten aus der Gruppe Methyl-, Methoxy-, Ethoxy- oder Chlor,

X ein Wasserstoff- oder Chloratom und

m und n unabhängig voneinander 0 oder eine ganze Zahl von 1 bis 3 bedeuten,

Sulfitionen zusetzt und anschließend erhitzt.

Die Anzahl der Substituenten $R_1$ und $R_2$ variiert jeweils zwischen 0 und 3.

Vorzugsweise bedeuten $R_1$ und $R_2$ Methyl, Methoxy- oder Chlor in 2-, 4- oder 5-Stellung und X ein Wasserstoffatom. Insbesondere bedeuten $R_1$ und $R_2$ jeweils 2 Methoxygruppen in 2- und 5-Stellung und ein Chloratom in 4-Stellung, und X ein Wasserstoffatom (Pigment Yellow 83).

Die Sulfitionen werden als Schwefeldioxid, in Gasform oder in wäßriger Lösung, oder als ein lösliches Sulfit, Hydrogensulfit oder Disulfit zugesetzt, insbesondere als Natrium- oder Kaliumsulfit, -hydrogensulfit oder -disulfit in trockener oder gelöster Form. Die erforderliche Menge kann durch Vorproben ermittelt werden und beträgt etwa 0,5 bis 10, vorzugsweise 2 bis 5, Gew.-%, bezogen auf das gebildete Pigment.

Das Erhitzen der Pigmentsuspension kann in der üblichen Weise erfolgen, beispielsweise einige Minuten bis wenige Stunden auf Temperaturen von etwa 50 bis 100 °C, vorzugsweise etwa eine halbe bis zwei Stunden auf 80 bis 100 °C. Dieses Erhitzen kann auch im Zusammenhang mit einer thermischen Nachbehandlung bei Temperaturen über 100 °C erfolgen, wobei gegebenenfalls Hilfsstoffe wie organische Lösungsmittel zugesetzt werden. In diesem Falle wird jedoch zweckmäßig die Temperatur am Anfang nur langsam gesteigert.

Wenn eine thermische Nachbehandlung entsprechend der DE-AS 23 02 509 durchgeführt werden soll, so erfolgt zuerst die erfindungsgemäße Behandlung, anschließend das alkalische Ausrühren, worauf

das isolierte und neutral gewaschene Pigment in einem Gemisch aus Wasser und einem mit Wasser nicht oder nicht unbegrenzt mischbaren organischen Lösungsmittel auf Temperaturen oberhalb 100 °C erhitzt wird. Diese Alkalibehandlung ist auch in der DE-AS 23 02 517 beschrieben.

Das Pigment wird in üblicher Weise aus der wäßrigen Suspension, gegebenenfalls nach dem Abtrennen des organischen Lösungsmittels, isoliert, salzfrei gewaschen, getrocknet und gemahlen.

Vor allem bei großtechnischen Ansätzen wird nach dem erfindungsgemäßen Verfahren ein Produkt von gleichmäßriger Qualität erhalten, das eine einwandfreie Lösungsmittel-, Überlackier-, Migrations- und Ausblutechtheit aufweist.

In den folgenden Beispielen beziehen sich Teile- und Prozentangaben auf das Gewicht, wenn nichts anderes angegeben ist.

## Beispiel 1

50,6 Teile 3,3'-Dichlor-4,4'-diaminobiphenyl wurden mit 600 Volumenteilen Wasser und 250 Volumenteilen 5 N Salzsäure verrührt, mit Eis auf etwa 0 °C gekühlt und mit 52,5 Volumenteilen 40 %iger Natriumnitritlösung bei 0 bis 5 °C bisdiazotiert. Die geklärte Bisdiazoniumsalzlösung wurde unter gutem Rühren bei 20 bis 25 °C in eine essigsaure Suspension von 87 Teilen 1-Acetoacetylamino-2-methoxybenzol, erhalten durch Ausfällen aus einer alkalischen Lösung des Acetessigarylids, einlaufen gelassen wobei der pH-Wert der Kupplungssuspension bei 4,5 bis 5,5 gehalten wurde. Nach beendeter Umsetzung des Bisdiazoniumsalzes setzte man der Suspension 5 Teile Natriumsulfit zu, erhitzte durch Einleiten von Wasserdampf auf 90-95 °C, hielt eine Stunde bei dieser Temperatur, kühlte danach auf 70 °C ab, filtrierte, wusch salzfrei und trocknete. Das erhaltene gelbe Pigment weist sehr gute Überlackier- und Ausblutechtheit auf.

## Beispiel 2

Es wurde wie im Beispiel 1 beschrieben vorgegangen, jedoch wurde nach beendeter Kupplung eine alkalische Lösung von 37,6 Teilen einer handelsüblichen Harzseife zugesetzt und durch Einstellen eines pH-Wertes von 4-5 wieder ausgefällt. Es wurde ein gelbes Pigment mit ebenfalls sehr guter Überlackier- und Ausblutechtheit erhalten.

## Beispiel 3 (Vergleichsbeispiel)

Es wurde wie in Beispiel 1 beschrieben vorgegangen mit dem Unterschied, daß die Natriumsulfitzugabe unterblieb. Das erhaltene Pigment wies, insbesondere beim großtechnischen Ansatz, eine deutlich verminderte Überlackier- und Ausblutechtheit auf.

## Beispiel 4

25,3 Teile 3,3'-Dichlor-4,4'-diaminobiphenyl wurden mit 500 Volumenteilen 31 %iger Salzsäure verrührt, durch Zugabe von Eis auf etwa 0 °C abgekühlt und mit 26,3 Volumenteilen 40 %iger Natriumnitritlösung bisdiazotiert. Man verdünnte mit 400 Volumenteilen Wasser, zerstörte den schwachen Überschluß an Nitritionen mit Amidosulfonsäure und filtrierte unter Verwendung eines handelsüblichen Kieselgurpräparats als Klärhilfsmittel. Die so erhaltene Bisdiazoniumsalzlösung wurde im Laufe einer Stunde unter gutem Rühren zu einer feinverteilten Suspension von 1-Acetoacetylamino-2,4-dimethylbenzol laufen gelassen, die durch Ausfällen einer alkalischen Lösung von 43,5 Teilen der Kupplungskomponente in 300 Volumenteilen Wasser und 20 Volumenteilen 33 %iger Natronlauge mit 14 Volumenteilen Eisessig bei 0 bis 10 °C bereitet worden war. Während der Kupplung hielt man den pH-Wert der Suspension durch Zutropfenlassen von 6 %iger Natronlauge im Bereich zwischen 5,5 und 4,5. Nach beendeter Kupplung fügte man der Pigmentsuspension 10 Volumenteile 40 %ige Natriumhydrogensulfitlösung zu, erhitzte anschließend auf 98 °C, hielt 30 Minuten bei dieser Temperatur und filtrierte nach dem Abkühlen der Suspension auf 70 °C.

Das nach dem Waschen, Trocknen und Mahlen erhaltene rotstichig gelbe Pigment weist auch bei großtechnischen Herstellungsverfahren, beispielsweise im Nitrolack, einwandfreie Überlackierechtheit auf.

## Beispiel 5

32,2 Teile 2,2',5,5'-Tetrachlor-4,4'-diamino-biphenyl wurden in 80 Volumenteile 31 %ige Salzsäure eingetragen und der erhaltene Brei des Hydrochlorids nach Rühren über Nacht und Zugabe von Eis unter Rühren bei 0 bis 5 °C mit 26,3 Volumenteilen 40 %iger Natriumnitritlösung langsam bisdiazotiert. Die erhaltene Bisdiazoniumsalzlösung wurde nach Zusatz eines handelsüblichen Kieselgurpräparates als Klärhilfsmittel filtriert und mit Wasser auf 500 Volumenteile verdünnt. 44 Teile 1-Acetoacetylamino-4-methoxybenzol wurden in 400 Volumenteilen Wasser und 20 Volumenteilen 33 %iger Natronlauge gelöst, unter Verwendung von Aktivkohle filtriert und die Lösung durch Verdünnen mit Wasser auf 500

Gewichtsteile eingestellt. Die beiden erhaltenen Lösungen ließ man unter Rühren gleichzeitig zu einer Natriumacetat-Essigsäure-Pufferlösung, die aus 50 Volumenteilen 33 %iger Natronlauge und 40 Volumenteilen Eisessig bereitet und die mit 10 Volumenteilen einer 10 %igen wäßrigen Lösung des Reaktionsproduktes aus 1 Mol Oleylalkohol und 30 Mol Ethylenoxid versetzt worden war, so zulaufen, daß während der Umsetzung kein Überschuß an Bisdiazoniumsalz nachweibar war. Nach beendeter Kupplung wurden zur Pigmentsuspension 6 Teile Natriumsulfit zugefügt, es wurde auf 98 °C erhitzt, 1 Stunde bei dieser Temperatur gerührt und danach das Reaktionsprodukt in der üblichen Weise isoliert.

Es wurde ein leuchtend gelbes Pigment erhalten, das beim Einarbeiten in Weich-PVC eine einwandfreie Migrationsechtheit aufwies.

Beispiel 6 (Vergleichsbeispiel)

Es wurde wie in Beispiel 5 beschrieben vorgegangen mit dem Unterschied, daß die Natriumsulfitzugabe unterblieb. Das erhaltene Pigment wies nach dem Einarbeiten in Weich-PVC eine wesentlich schlechtere Migrationsechtheit auf als das Pigment aus Beispiel 5.

Beispiel 7

32,2 Teile 2,2',5,5'-Tetrachlor-4,4'-diaminobiphenyl wurden wie in Beispiel 5 beschrieben bisdiazotiert. Durch Lösen von 51 Teilen 1-Acetoacetylamino-2-methoxy-4-chlorbenzol in 400 Volumenteilen Wasser und 20 Volumenteilen 33 %iger Natronlauge und anschließende Fällung mit 14 Volumenteilen 96 %iger Essigsäure in Gegenwart von 20 Volumenteilen einer 10 %igen wäßrigen Lösung des Reaktionsproduktes von 1 Mol Stearylalkohol und 25 Mol Ethylenoxid wurde eine feinverteilte Suspension der Kupplungskomponente bereitet. Zu dieser wurde unter Rühren im Laufe einer Stunde die Bisdiazoniumsalzlösung zulaufen gelassen, wobei der pH-Wert der Reaktionsmischung durch Zutropfenlassen von 4n Natriumacetatlösung bei etwa 4 bis 3,5 gehalten wurde. Unmittelbar nach beendeter Kupplung wurden in die Suspension des Disazopigments 7 Teile Kaliumdisulfit eingetragen, durch Einleiten von Wasserdampf auf 95 °C erhitzt und bei dieser Temperatur 1 Stunde gerührt. Nach dem Filtrieren wurde ein grünstichig gelbes Pigment erhalten, das salzfrei gewaschen, bei 60 °C getrocknet und schließlich gemahlen wurde. Das hellgelbe Pigment zeigte beim Einarbeiten in Weich-PVC eine gute Migrationsechtheit.

Beispiel 8 (Vergleichsbeispiel)

Es wurde wie in Beispiel 7 beschrieben vorgegangen mit dem Unterschied, daß die Kaliumdisulfitzugabe unterblieb. Das erhaltene Pigment wies nach dem Einarbeiten in Weich-PVC eine schlechte Migrationsechtheit auf.

Beispiel 9

50,6 Teile 3,3'-Dichlor-4,4'-diamino-biphenyl wurden nach der in Beispiel 1 beschriebenen Methode bisdiazotiert. 43,5 Teile 4-Acetoacetylamino-2-methoxybenzol und 43,5 Teile 4-Acetoacetylamino-2,4-dimethylbenzol wurden in 800 Volumenteilen Wasser durch Zugabe von 40 Volumenteilen 33 %iger Natronlauge gelöst, die alkalische Lösung unter Verwendung von Aktivkohle geklärt und das Gemisch der Kupplungskomponenten nach Zusatz von 5 Volumenteilen einer 10 %igen wäßrigen Lösung des Reaktionsproduktes aus 1 Mol Stearylalkohol und 20 Mol Ethylenoxid unter Rühren mit 28 Volumenteilen 96 %iger Essigsäure ausgefällt. Nach Zugabe von 100 Teilen kristallinem Natriumacetat wurde zu der erhaltenen Suspension die Lösung des Bisdiazoniumsalzes zulaufen gelassen. Unmittelbar nach beendeter Kupplung wurden 8 Teile Kaliumsulfit zugesetzt und die Pigmentsuspension durch Einleiten von Wasserdampf 1 Stunde auf 95 °C erhitzt. Nach dem Abkühlen auf 60 °C wurde das Mischkupplungsprodukt abgesaugt, mit warmen Wasser salzfrei gewaschen, getrocknet und gemahlen. Das so erhaltene gelbe Pigment weist eine einwandfreie Lösungsmittelechtheit auf.

Beispiel 10 (Vergleichsbeispiel)

Es wurde wie in Beispiel 9 beschrieben vorgegangen mit dem Unterschied, daß die Kaliumsulfitzugabe unterblieb. Das erhaltene Pigment wies eine schlechtere Lösungsmittelechtheit auf als das Pigment aus Beispiel 9.

Beispiel 11

50,6 Teile 3,3'-dichlor-4,4' diaminobiphenyl wurden mit 600 Volumenteilen Wasser und 250 Volumenteilen 5 N Salzsäure verrührt, mit Eis auf 0 °C gekühlt und mit 52,5 Volumenteilen 40 %iger Natriumnitritlösung bei 0 bis 5 °C bisdiazotiert. Die geklärte Bisdiazoniumsalzlösung ließ man unter gutem Rühren bei 20 bis 25 °C in eine essigsaure Suspension von 115 Teilen 1-Acetoacetylamino-4-chlor-2,5-dimethoxybenzol, erhalten durch Ausfällen aus einer alkalischen Lösung des Acetessigarylids,

einlaufen, wobei der pH-Wert der Kupplungssuspension bei 4,5 bis 5,5 gehalten wurde. Nach beendeter Umsetzung des Bisdiazoniumsalzes setzte man der Suspension 5 Teile Natriumsulfit zu, erhitzte durch Einleiten von Wasserdampf auf 90-95 °C, hielt eine Stunde bei dieser Temperatur, kühlte danach auf 70 °C ab, filtrierte, wusch salzfrei und trocknete. Das erhaltene Pigment weist völlig einwandfreie Überlackier- und Ausblutechtheit auf.

Die Kupplung kann auch in Gegenwart von Harzseife vorgenommen werden. Ohne Zusatz von Alkalisulfit, -hydrogensulfit, -pyrosulfit oder Schwefeldioxid erhält man bei sonst gleicher Arbeitsweise, insbesondere bei großtechnischen Ansätzen, das Pigment mit deutlich verminderter Überlackier- und Ausblutechtheit.

Beispiel 12

In einer Abwandlung des Verfahrens gemäß Beispiel 11 ließ man die wie bei Beispiel 11 hergestellten Lösungen des Bisdiazoniumsalzes und der Kupplungskomponente gleichzeitig in ein Reaktionsgefäß laufen, in dem Essigsäure und ein oberflächenaktives Mittel bereits vorgelegt waren.

Nach beendeter Kupplung setzte man der rohen Pigmentsuspension 5 %, bezogen auf die Pigmentausbeute, an Kaliumhydrogensulfit zu, erhitzte durch Mantelheizung auf 85-90 °C und hielt zwei Stunden bei dieser Temperatur. Die Aufarbeitung verlief dann wie in Beispiel 11 geschildert. Das erhaltene Pigment weist völlig einwandfreie Überlackier- und Migrationsechtheiten auf.

Beispiel 13

Man verfuhr nach Beispiel 11, stellte aber nach dem Abkühlen auf 70 °C die Suspension mit Natronlauge alkalisch und verfuhr dann gemäß Beispiel 1 der DE-AS 23 02 509. Man erhielt so das Pigment in der dort beschriebenen Form mit hoher Deckkraft, guter Viskosität und hohem Glanz. Darüberhinaus wird auch bei großtechnischen Ansätzen eine einheitliche Qualität mit einwandfreier Überlackier- und Ausblutechtheit erhalten.

**Ansprüche**

1. Verfahren zur Verbesserung der anwendungstechnischen Eigenschaften von Disazopigmenten, dadurch gekennzeichnet, daß man der bei der Kupplung erhaltenen schwach sauren bis neutralen wäßrigen Suspension eines Disazopigments mit der Struktur entsprechend der allgemeinen Formel

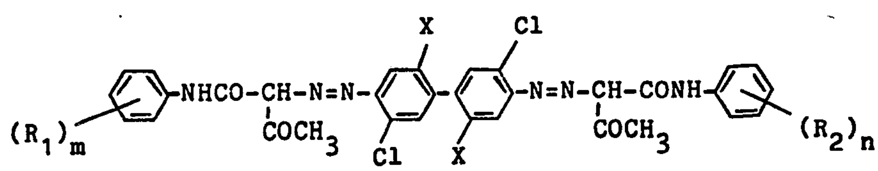

worin

$R_1$ und $R_2$ gleiche oder verschiedene Substituenten aus der Gruppe Methyl-, Methoxy-, Ethoxy- oder Chlor,

X ein Wasserstoff- oder Chloratom und

m und n unabhängig voneinander 0 oder eine ganze Zahl von 1 bis 3 bedeuten,

Sulfitionen zusetzt und anschließend erhitzt.

2. Verfahren nach Anspruch 1, dadurch gekennzeichnet, daß in der allgemeinen Formel $R_1$ und $R_2$ Methyl-, Methoxy- oder Chlor in 2-, 4- oder 5-Stellung und X ein Wasserstoffatom bedeuten.

3. Verfahren nach Anspruch 1 oder 2, dadurch gekennzeichnet, daß das Disazopigment C.I. Pigment Yellow 83 ist.

4. Verfahren nach einem oder mehreren der Ansprüche 1 bis 3, dadurch gekennzeichnet, daß man die Sulfitionen in Form von Schwefeldioxid oder eines löslichen Sulfits, Hydrogensulfits oder Disulfits zusetzt.

5. Verfahren nach einem oder mehreren der Ansprüche 1 bis 4, dadurch gekennzeichnet, daß man die Pigmentsuspension eine halbe Stunde bis zwei Stunden auf 50 bis 100 °C erhitzt.

**Claims**

1. Process for improving the application properties of diazo pigments, characterized in that sulfite ions are added to a weakly acid to neutral aqueous suspension obtained in the coupling step of a diazo pigment, having the structure corresponding to the general formula

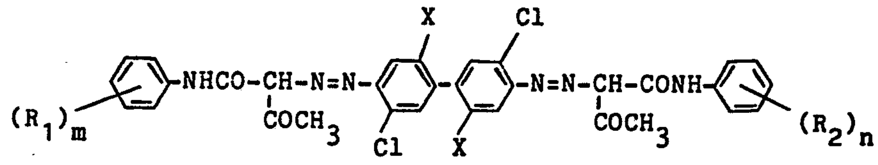

in which

$R_1$ and $R_2$ denote identical or different substituents from the group methyl-, methoxy, ethoxy or chlorine,

X is a hydrogen or chlorine atom and

m and n are independently from each other zero or an integer from 1 to 3,

and subsequently heating the suspension.

2. Process according to claim 1, characterized in that in the general formula $R_1$ and $R_2$ denote methyl, methoxy or chlorine in the 2-, 4 or 5-position and X denotes a hydrogen atom.

3. Process according to claims 1 or 2, characterized in that the diazo pigment is C.I. Pigment Yellow 83.

4. Process according to one or more of the claims 1 to 3, characterized in that the sulfite ions are added in the form of sulfur dioxyde or as a soluble sulfite, hydrogen sulfite or disulfite.

5. Process according to one or more of the claims 1 to 4, characterized in that the pigment suspension is heated for a half to two hours at 50 to 100 °C.

**Revendications**

1. Procédé pour améliorer les propriétés de technique d'application de pigments disazoïques, caractérisé en ce qu'on ajoute des ions sulfites à la suspension aqueuse faiblement acide à neutre, obtenue lors de la copulation, d'un pigment disazoïque répondant à la formule générale

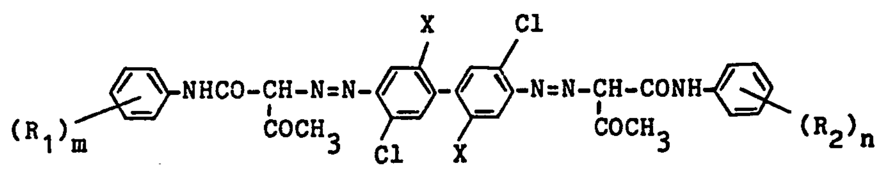

dans laquelle

$R_1$ et $R_2$ désignent des substituants identiques ou différents choisis parmi les groupes méthyle, méthoxy, éthoxy ou le chlore,

X désigne un atome d'hydrogène ou de chlore et

m et n désignent chacun, indépendamment l'un de l'autre, 0 ou un nombre entier de 1 à 3,

puis en ce qu'on chauffe.

2. Procédé suivant la revendication 1, caractérisé en ce que, dans la formule générale, $R_1$ et $R_2$ désignent chacun un radical méthyle ou méthoxy ou un atome de chlore en position 2, 4 ou 5 et X est un atome d'hydrogène.

3. Procédé suivant l'une quelconque des revendications 1 et 2, caractérisé en ce que le pigment disazoïque est le C.I. Pigment Yellow 83.

4. Procédé suivant l'une quelconque des revendications 1 à 3, caractérisé en ce qu'on ajoute les ions sulfites sous forme d'anhydride sulfureux ou d'un sulfite, hydrogénosulfite ou disulfite solubles.

5. Procédé suivant l'une quelconque des revendications 1 à 4, caractérisé en ce qu'on chauffe la suspension de pigment pendant une demi-heure à deux heures à 50-100 °C.